# EUROPÄISCHE PATENTANMELDUNG

(11) **EP 1 055 616 A1**
(43) Veröffentlichungstag der Anmeldung: **29.11.2000**
(21) Anmeldenummer: 00111202.8
(22) Anmeldetag: 24.05.2000
(51) Int. Cl.: B65G 1/04, G11B 17/22

(54) **Vorrichtung zum Einlagern von Stückgut in ein Regalsystem**

(30) Priorität: 28.05.1999 DE 19924537
(71) Anmelder: IBK Engineering GmbH, 81369 München (DE)
(72) Erfinder: Raschke, Roland, 85652 Pliening (DE)
(74) Vertreter: Dosterschill, Peter, Dr.

(57) **Zusammenfassung**

Die Erfindung betrifft eine Vorrichtung zum Beladen von Stückgut in mindestens ein Regalsystem, wobei die Vorrichtung mindestens einen Führungswagen FW und mindestens ein Greifsystem GS1 zum Greifen des Stückguts aufweist. Das Greifsystem GS1 weist ein erstes und ein zweites Greifelement GSE11, GSE12 auf und ist in der Weise ausgestaltet, daß das Stückgut seitlich umfaßt wird. Jedes Greifelement GSE11, GSE1 weist an seiner dem Regalsystem zugewandten Seite eine Breite auf, die maximal der Breite eines vertikalen Regalsystemträgers entspricht.

Erfindungsgemäß ist vorgesehen, daß der Abstand zwischen erstem und zweitem Greifelement GSE11, GSE 12 veränderbar ist. Damit ist die Vorrichtung in der Lage, Stückgut unterschiedlicher Abmessungen und Formgestaltungen in ein Regalsystem zu laden und aus dem Regalsystem zu entladen.

## Beschreibung

### Hintergrund der Erfindung

Die Erfindung bezieht sich auf eine Vorrichtung zum Beladen von Stückgut in mindestens ein Regalsystem nach dem Oberbegriff des Anspruchs 1.

### Stand der Technik

Es sind Regalbedienungssysteme für Fachregallager mit Aufteilung in einzelne Regalsysteme und dazwischen liegenden Regalgängen bekannt, wobei sogenannte Regalbediengeräte als Ein- und Auslagerungs- bzw. Be- und Entladegeräte eingesetzt werden. Die Regalbediengeräte übernehmen von einem Wareneingang oder aus der Produktion auf einem Einlagerungsförderer ankommende Ware und lagern diese in ein vorbestimmtes Regalfach ein. Das Auslagern erfolgt in umgekehrter Richtung mit einem Auslagerungsförderer, der gleich dem Einlagerungsförderer ist (US 32 97 379, WO 96 15 963 A1, DE 39 41 754 A1, DE 37 24 025 A1, DE 43 203 A1, DE 40 09 635 A1).

Bekannte Regalbediengeräte bestehen aus einem Wagen, der in im Boden verlegten Schienen geführt ist. Die Schienen sind parallel zur Längsrichtung des jeweiligen Regalsystems angeordnet, wobei zwei Regalsysteme parallel zueinander angeordnet sein können und die Schienen in einem Regalgang zwischen den zwei parallel angeordneten Regalsystemen verlegt sind. Der Wagen trägt einen senkrechten Mast, wobei ein auf dem Mast in vertikaler Richtung verfahrbares Hubteil ein Greifsystem für die Ein- und/oder Auslagerung der Waren trägt. Bei großen Höhen der Regalsysteme können zusätzlich zu im Boden verlegten Schienen auch Führungsschienen im Deckenbereich vorgesehen sein.

Aus US 48 56 956 ist eine Vorrichtung zum Beladen von Stückgut in ein Regalsystem bekannt, wobei die Vorrichtung einen Führungswagen und mindestens ein Greifsystem zum Greifen des Stückguts aufweist. Das Greifsystem hat zwei parallel zueinander angeordnete Greifelemente, die das Stückgut seitlich umfassen, wobei jedes Greifelement an seiner dem Regalsystem zugewandten Seite eine Breite aufweist, die maximal der Breite eines vertikalen Regalsystemträgers entspricht. Die beiden Greifelemente sind fest zueinander und damit fest beabstandet zueinander angeordnet.

### Aufgabe der Erfindung

Ausgehend von diesem Stand der Technik liegt der Erfindung der Aufgabe zugrunde, eine Vorrichtung der eingangs genannten Art anzugeben, die erweiterte Einsatzmöglichkeiten für das Beladen von Stückgut in Regalsysteme bietet.

Diese Aufgabe wird erfindungsgemäß durch eine Vorrichtung gelöst, die in den Ansprüchen definiert sind.

Die Erfindung weist eine Mehrzahl von Vorteilen auf.

Die erfindungsgemäße Vorrichtung ermöglicht es, Stückgut unterschiedlicher Abmessungen und Formgestaltungen in ein Regalsystem zu laden und aus dem Regalsystem zu entladen. Dieses Stückgut kann gerade, parallel zu der Transportrichtung angeordnete Kanten oder beispielsweise eine kreisförmige Kontur aufweisen.
Damit zeichnet sich die erfindungsgemäße Vorrichtung durch ein breites Einsatzspektrum aus. Sie ist unter anderem in Regalsystemen einsetzbar, die Regalfächer unterschiedlicher Breite aufweisen und damit die Aufnahme von Stückgut unterschiedlicher Breite ermöglichen.

Weitere vorteilhafte Ausführungsformen der erfindungsgemäßen Vorrichtung sind dadurch gekennzeichnet, daß der Vorrichtung ein Steuerwerk mit einem Steuerungsprogramm zugeordnet ist, das in der Weise ausgestaltet ist, daß mehrere Greifsysteme, Greifelemente, und Führungswagen individuell ansteuerbar sind. Damit läßt sich die erfindungsgemäße Vorrichtung zeitgleich zum Be- und Entladen unterschiedlichen Stückguts nutzen und eine besonders wirtschaftliche Betriebsweise realisieren. Die individuelle Ansteuerung der Greifelemente eines Greifssystems zeichnet sich unter anderem auch durch den Vorteil aus, daß beispielsweise zum Erfassen bzw. Ablegen von Stückgut nur ein Greifelement aktiviert werden kann, während ein weiteres Greifelement in einer festen Position verbleiben kann.

Nach einer weiteren vorteilhaften Ausgestaltung der Erfindung weist die Vorrichtung ein horizontales Führungselement zur horizontalen Positionierung des Führungswagens und/oder ein vertikales Führungselement zur vertikalen Positionierung des Führungswagens auf, wobei das horizontale Führungselement und/oder das vertikale Führungselement mit dem Regalsystem verbindbar ist.

Die erfindungsgemäße Vorrichtung erfordert keinen Wagen, der in im Boden verlegten Schienen und/oder in im Deckenbereich angeordneten Führungselementen geführt wird. Damit entfällt auch die Notwendigkeit für die genannten Schienen und Führungselemente. Eine Montage und gegebenenfalls eine bei einem Abbau des Regalsystems erforderliche Demontage der Schienen und Führungselemente entfällt.

Die erfindungsgemäß vorgesehene Verbindung von horizontalen und vertikalen Führungselementen am Regalsystem ermöglicht es, die Regalsysteme in einfacher Weise an unterschiedlichen Orten zu positionieren. Die Regalsysteme können hierzu beweglich ausgestaltet und zum Beispiel mit Rollen versehen sein.

Durch die Anordnung des fest angeordneten (vertikalen) Führungselements und des eigentlichen Regalsystems auf einem gemeinsamen Grundrahmen gegebenenfalls mit Schwingmetallelementen lassen sich mechanische Schwingungen, die z.B. über den Untergrund der erfindungsgemäßen Vorrichtung auf diese wirken, weitgehend reduzieren, so daß diese mechanischen Schwingungen praktisch keinen Einfluß auf die Funktionsfähigkeit der erfindungsgemäßen Vorrichtung haben. Zudem wird eine im Stand der Technik bei Schienenbetrieb deutlich ausgeprägte Geräuschentwicklung unterbunden, so daß sich die erfindungsgemäße Vorrichtung zum Beispiel auch in Verkaufsräumen betreiben läßt, ohne daß das Publikum durch Geräusche gestört wird.

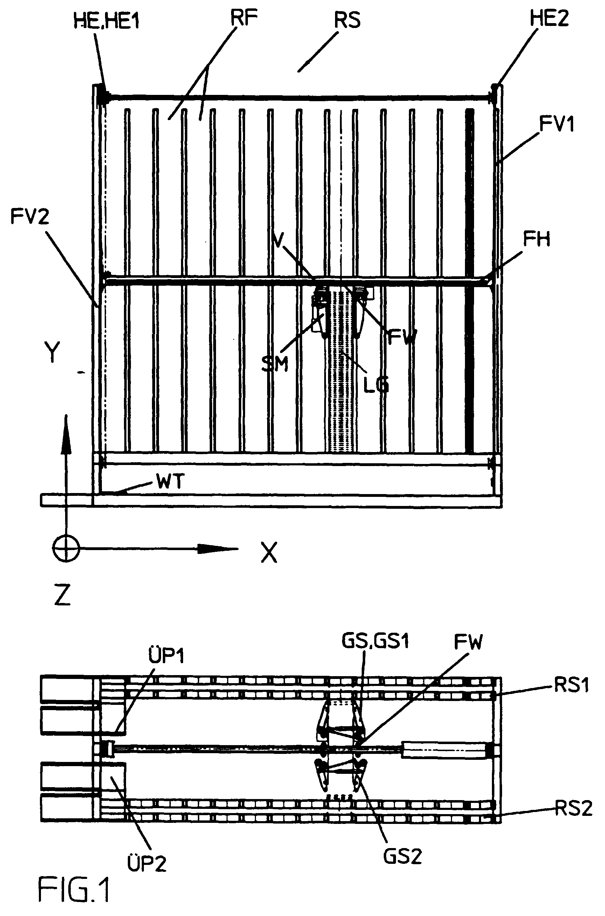

Nach einer vorteilhaften Ausführungsform der Erfindung weist die Vorrichtung mindestens ein Magazin zur Aufnahme von mehr als einer Stückguteinheit auf. Damit wird die Zahl der Fahrten des Führungswagens zu einem Warenträger (WT in Figur 1) bzw. Übergabepunkt (ÜP1 bzw. ÜP2 in Figur 1) reduziert. Zugleich steht der Führungswagen in einem größeren Zeitraum für Be- und Entladevorgänge an den Regalsystemen zur Verfügung.

Nach einer vorteilhaften Ausführungsform der Erfindung weist das Regalsystem eine kreisring- oder kreisringsegmentförmige Grundfläche auf, wobei das mindestens eine Führungswagen drehbar bezüglich des Regalsystems gelagert ist. Insbesondere läßt sich das Regalsystem zylinderringförmig ausgestalten, wobei das Führungswagen im Mittelpunkt der entsprechenden konzentrischen Kreise angeordnet ist. Diese Ausführungsform der Erfindung zeichnet sich insbesondere durch die optimale Ausnutzung des verfügbaren Raumes aus. Ein weiterer praktisch wichtiger Vorteil besteht in den vergleichsweise kurzen Wegen, die der Führungswagen zurückzulegen hat. Hinzu kommt, daß die Rotationsbewegungen des Führungswagens gegenüber Linearbewegungen technisch einfacher zu realisieren.

Weitere vorteilhafte Ausführungsformen der Erfindung sind in den Unteransprüchen gekennzeichnet.

Die Erfindung wird nun anhand der Zeichnungen beschrieben.

### Kurze Beschreibung der Zeichnung

Es zeigt
- Figur 1: eine Seitenansicht und eine Draufsicht eines ersten Regalsystems mit einer ersten Ausführungsform der erfindungsgemäßen Vorrichtung;
- Figur 2: eine räumliche Darstellung und eine Draufsicht der erfindungsgemäßen Vorrichtung nach Figur 1;
- Figur 3: ein Ausführungsbeispiel einer konstruktiven Ausgestaltung eines Greifsystems der erfindungsgemäßen Vorrichtung nach Figur 1;
- Figur 4: ein Ausführungsbeispiel einer konstruktiven Ausgestaltung eines Stapel- und Entstapelmagazins der erfindungsgemäßen Vorrichtung nach Figur 1;
- Figur 5: ein Ausführungsbeispiel einer konstruktiven Ausgestaltung einer erfindungsgemäßen Vorrichtung, die anstelle des Magazins nach Figur 4 eine Aufnahmevorrichtung für kleinere Mengen von Stückgut aufweist;
- Figur 6: eine Seitenansicht und eine Draufsicht eines weiteren Regalsystems mit der erfindungsgemäßen Vorrichtung nach Figur 1;
- Figur 7: die Arbeitsweise der erfindungsgemäßen Vorrichtung nach Figur 1 bei einem Beladevorgang; und
- Figur 8: die Arbeitsweise der erfindungsgemäßen Vorrichtung nach Figur 1 bei einem Entladevorgang.

Figur 1 zeigt in schematischer Darstellung eine seitliche Ansicht sowie eine Draufsicht eines Regalsystems RS mit einer Vielzahl von Regalfächern RF, die in der horizontalen X-Richtung nebeneinander und in vertikaler Y-Richtung übereinander angeordnet sind. Die durch ein Kreuz angeordnete Z-Richtung gibt die Richtung der Tiefe der Regalfächer RF an. Die Anordnung der Regalfächer RF zueinander, ihre Breite, Höhe und Tiefe ist veränderbar.

An beiden Enden des Regalsystems erstrecken sich in vertikaler Y-Richtung zwei fest angeordnete, vertikale Führungselemente FV1, FV2, die dem Regalsystem RS räumlich zugeordnet bzw. mit diesem verbunden sind. In den vertikalen Führungselementen FV1, FV2 ist ein bewegliches, horizontales Führungselement FH geführt, dessen Höhe von einer Hubeinrichtung HE, zum Beispiel bestehend aus zwei Komponenten HE1 und HE2, bestimmt wird. An dem horizontalen Führungselement FH ist ein Führungswagen FW mit mindestens einem Greifsystem, vorzugsweise mit einem ersten und einem zweiten Greifsystem GS1, GS2 angeordnet.

Insbesondere sind das Regalsystem RS einerseits und das fest angeordnete (horizontale oder vertikale) Führungselement FV andererseits auf einem gemeinsamen Grundrahmen angeordnet. Durch die Anordnung des fest angeordneten Führungselements und des eigentlichen Regalsystems auf einem gemeinsamen Grundrahmen - gegebenenfalls mit Schwingmetallelementen - lassen sich mechanische Schwingungen, die über den Untergrund der erfindungsgemäßen Vorrichtung oder auf anderem Wege auf diese wirken, weitgehend reduzieren, so daß diese mechanischen Schwingungen praktisch keinen Einfluß auf die Funktionsfähigkeit der erfindungsgemäßen Vorrichtung haben. Ebenso wird ein geräuscharmer Betrieb sichergestellt.

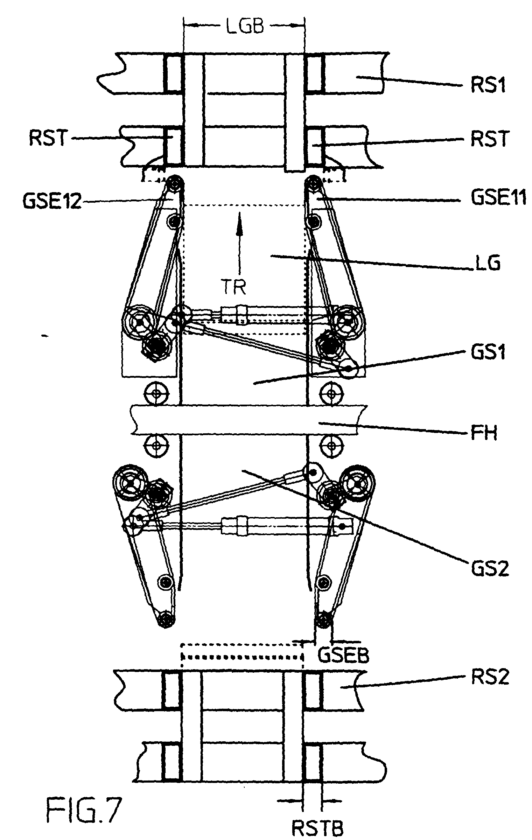

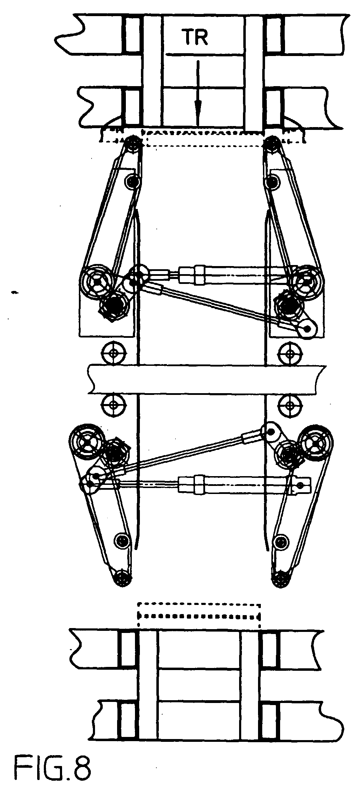

Die Greifsysteme GS1, GS2 lassen sich durch Verfahren des Führungswagens FW in der X-Richtung und durch Verfahren des horizontalen Führungselements FH in Y-Richtung durch die Hubeinrichtung HE vor jedes einzelne Regalfach RF positionieren. Das oben in Figur 1 durch eine gestrichelte Linie dargestellte Stückgut LG kann nach dem Anfahren eines vorbestimmten Regalfaches RF durch Verfahren des Greifsystems GS1, GS2 in Z-Richtung ein- oder ausgelagert werden, wie dies noch anhand der Figuren 7 und 8 beschrieben wird. Das in einem Regalfach RF gestapelte, mit einem Greifsystem GS1, GS2 entnommene Stückgut LG wird einem Stapelmagazin SM, das dem jeweiligen Greifsystem zugeordnet ist, zugeführt und z.B. einem bereitgestellten Werkstückträger WT an einem Übergabeplatz ÜP1 bzw. ÜP2 übergeben.

Am Regalsystem können anstelle mindestens eines fest angeordneten vertikalen Führungselements und eines beweglich angeordneten horizontalen Führungselements z.B. zwei fest angeordnete horizontale Führungselemente und ein beweglich angeordnetes vertikales Führungselement vorgesehen sein. Der Führungswagen ist in -diesem Fall an dem beweglich angeordneten vertikalen Führungselement angeordnet.

Ebenso können auch anders ausgestaltete Führungselemente vorgesehen sein, die mit dem jeweiligen Regalsystem fest verbunden bzw. verbindbar sind.

Figur 1 zeigt in ihrem unteren Teil eine Anordnung eines Führungswagens FW zwischen zwei Regalsystemen RS1, RS2, die von dem Führungswagen FW bedient werden. Weiterhin sind zwei Übergabeplätze ÜP1 und ÜP2 dargestellt.

Beispiele für das Stückgut LG sind Kompaktdisk (CD)-Kassetten, Bücher und Behälter mit unterschiedlicher Befüllung.

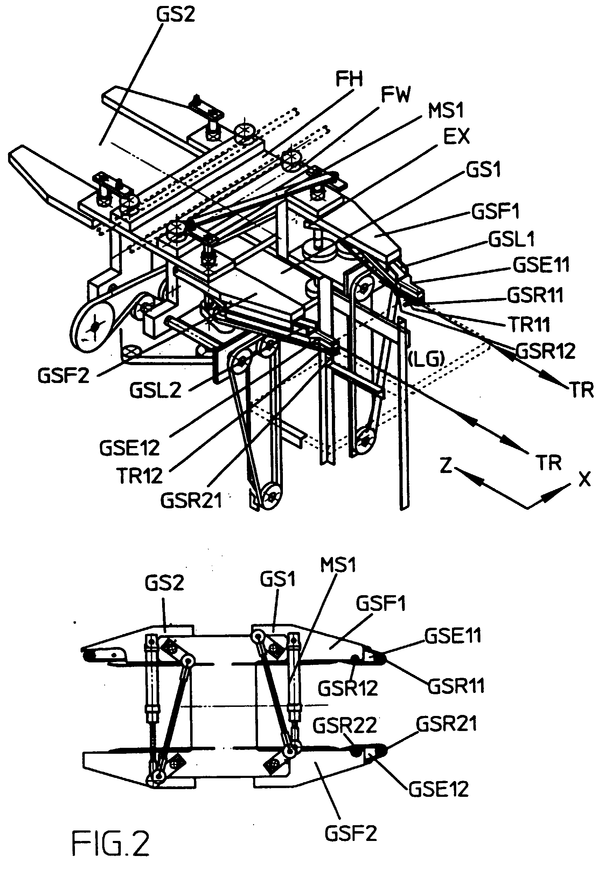

In Figur 2 ist ein Führungswagen FW dargestellt, an dem ein erstes Greifsystem GS1 und ein zweites Greifsystem GS2 angeordnet ist Jedes Greifsystem GS1, GS2 kann identisch und in der Weise ausgestaltet sein, daß das Stückgut seitlich umfaßt wird, wie auch noch anhand der Figuren 7 und 8 beschrieben wird.

Jedes Greifsystem GS kann ein erstes und ein zweites Greifelement GSE11, GSE12 aufweisen, wie dies für das erste Greifsystem GS1 in Figur 2 dargestellt ist.

Die Greifelemente GSE11, GSE12 sind jeweils an Linearführungsteilen GSL1, GSL2 angeordnet, die ihrerseits an Trägerelementen GSF1, GSF2 unter einem vorgebbaren Winkel (größer 0°) gegenüber der Transportrichtung TR des Stückguts angeordnet sind. Die Transportrichtung TR des Stückguts bei einem Beladevorgang und bei einem Entladevorgang ist jeweils durch einen Pfeil oben in Figur 2 bezeichnet. Durch diese Ausgestaltung werden die Greifelemente in der XZ-Ebene in X- und in Z-Richtung bewegt. Die Greifelemente werden damit gegenüber dem zu erfassenden bzw. erfaßten Stückgut geschlossen bzw. geöffnet. Damit läßt sich in vorteilhafter Weise auch Stückgut handhaben, das gegenüber vorgegebenen Abmessungen Toleranzen aufweist und/oder das nicht exakt an einer vorgegebenen Lagerposition gelagert ist.

Jedes Greifelement GES11, GSE12 hat im dargestellten Ausführungsbeispiel zwei parallel hintereinander angeordnete Rollen GSR11, GSR12; GSR21, (GSR22), die jeweils einen umlaufenden Transportriemen TR11 bzw. TR12 aufnehmen, mit denen das Stückgut transportiert wird, und zugleich Umlenkrollen für die Transportriemen sind. Diese Rollen haben in dem dargestellten Ausführungsbeispiel eine weitere Funktion, und zwar die Funktion, das bereits erfaßte Stückgut zu zentrieren. Diese Funktion wird unter anderem durch die Anordnung der Rollen zueinander (in Transportrichtung hintereinander) realisiert. Die Rollen bilden in dem Zeitpunkt, zu dem sie das Stückgut erfassen, einen punktförmigen Kontakt bzw. einen Kontakt in Form einer vertikalen Linie.

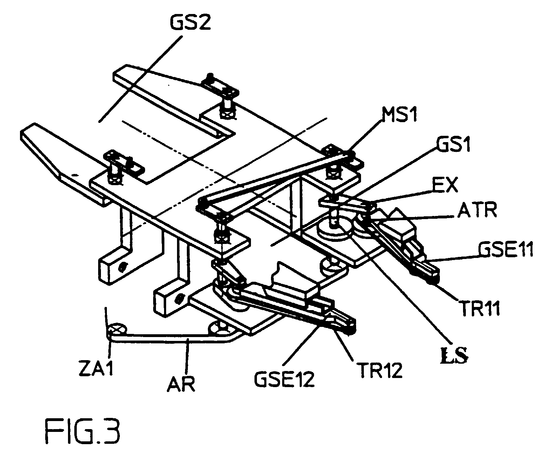

Beide Transportriemen TR11, TR12 werden durch eine erste zentrale Antriebseinrichtung ZA1 angetrieben, wobei diese Transportriemen synchronisiert sind. Wie oben in Figur 3 dargestellt, ist mit der ersten zentralen Antriebseinrichtung ZA1 ein Antriebsriemen AR verbunden.

Wie weiter in Figur 3 dargestellt ist, bewegt ein Schwenkmechanismus MS1 des Greifsystems GS1 durch eine Schwenkbewegung über einen Exzenter EX und eine dort angeordnete Transportrolle ATR die Greifelemente GSE11, GSE12 in Z- und in X-Richtung. Dabei erfolgt durch eine Lagerstelle LS gleichzeitig ein Synchronantrieb sowie ein Ankoppeln der Transportrolle ATR für die Transportriemen TR11, TR12.

Bei dem erfindungsgemäßen Vorrichtung wird vorzugsweise in genau einem Bewegungsablauf ein Zentriervorgang, ein Greifvorgang, und zugleich ein Vor- bzw. Rücktransport von Stückgut durchgeführt, so daß insgesamt ein zeiteffizienter Betrieb der Vorrichtung erzielt wird.

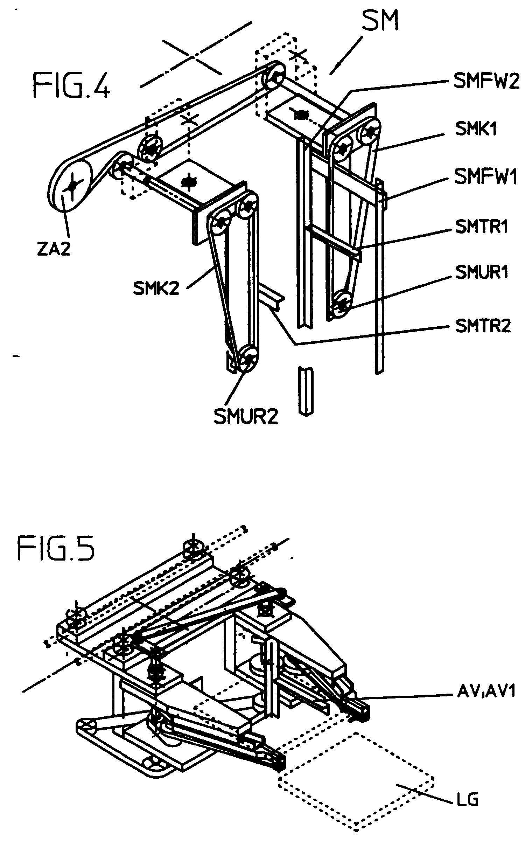

Figur 4 zeigt eine Ausführungsform des konstruktiven Aufbaus des Stapel- und Entstapelmagazins SM. Das Magazin SM umfaßt insbesondere vier an den Ecken angeordnete vertikale und beabstandete Führungswinkel, von denen in Figur 4 die Führungswinkel SMFW1 und SMFW2 dargestellt sind. Weiterhin weist das Magazin zwei vertikal bewegbare Mitnehmer SMTR1 und SMTR2 auf, die jeweils zwischen zwei Führungswinkeln angeordnet sind und im Betrieb das Stückgut tragen. Diese Mitnehmer sind beispielsweise an jeweils einer Kette SMK1, SMK2 befestigt, die über Umlenkrollen SMUR1, SMUR2 geführt sind. An den Umlenkrollen werden die Mitnehmer ein- oder ausgeschwenkt, so daß auf diese Weise Stückgut aufgenommen oder abgelegt wird. Die vorstehend genannten Mitnehmerketten SMK1, SMK2 werden durch eine weitere zentrale Antriebseinrichtung ZA2 betätigt.

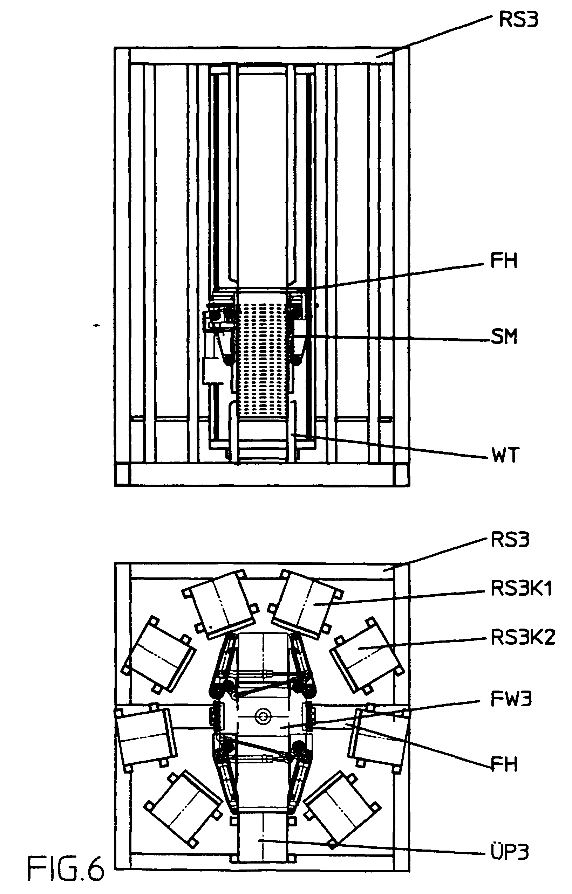

Figur 5 zeigt ein Ausführungsbeispiel einer konstruktiven Ausgestaltung einer erfindungsgemäßen Vorrichtung, die anstelle des Magazins SM nach Figur 4 eine Aufnahmevorrichtung AV für kleinere Mengen von Stückgut aufweist. Diese Aufnahmevorrichtung besteht aus vertikalen Führungswinkeln, wobei in Figur 4 lediglich der Führungswinkel SMFW2 dargestellt ist. Anstelle beweglicher Mitnehmer weist die Aufnahmevorrichtung AV fest angeordnete Aufnehmer AV1, AV2 auf, von denen in der Figur 5 lediglich der Aufnehmer AV1 dargestellt ist.

Figur 6 zeigt ein Regalsystem RS3, das eine kreisringförmige Grundfläche aufweist. Das Regalsystem RS3 hat damit die Form eines Zylinderrings, wobei ein Führungswagen FW3 innerhalb des Regalsystems RS3 und drehbar, zum Beispiel auf einem horizontalen Führungselement FH gelagert ist. Nicht dargestellte vertikale Führungselemente sind fest mit dem Regalsystem verbunden und gegebenenfalls mit diesem auf einem gemeinsamen Grundrahmen angeordnet.
Ein Übergabeplatz ÜP3 ist insbesondere an der Peripherie des Kreises angeordnet, an dem die weiteren Komponenten (Regalfächereinheiten) RS3K1, RS3K2, ... des Regalsystems RS3 angeordnet sind.

Die Figuren 7 und 8 zeigen zunächst die Anordnung des Stückguts LG in den Regalfächem sowie die Positionierung der Greifsysteme GS1, GS2 vor den Regalfächem beim Einladen des Stückguts (Figur 7) bzw. vor dem Ausladen des Stückguts (Figur 8). Das Stückgut SG steht um eine vorgebbare Strecke aus dem Regalsystem soweit vor, daß das jeweilige Greifsystem das Stückgut seitlich umfassen kann. Weiterhin veranschaulichen beide Figuren den Zusammenhang zwischen der Breite RSTB der Regalsytemträger RST und der Breite GSEB der Greifelemente GSE an ihrer den Regalsystemen RS1, RS2 zugewandten Seiten: wie schon beschrieben, weisen die Greifelemente an ihrer dem jeweiligen Regalsystem zugewandten Seite eine Breite GSEB auf, die maximal der Breite RSTB eines vertikalen Regalsystemträgers RST entspricht.

Zur Handhabung von Stückgut, das anders als in den Figuren 7 und 8 keine geraden, parallel zu der Transportrichtung TR angeordnete Kanten, sondern beispielsweise eine kreisförmige Kontur aufweist, sind die Greifsysteme, insbesondere die Greifelemente GSE11, GSE12, und die Transportriemen TR11, TR12 konstruktiv so gestaltet, daß diese unterschiedliche Öffnungsbreiten während des Einladens und während des Ausladens des Stückguts realisieren.

Wie beschrieben, können mehrere Hubeinrichtungsteile (HE1, HE2 in Figur 1) bzw. mehrere führungswagenindividuelle Hubeinrichtungen, mehrere Führungswagen, mehrere Greifsysteme und mehrere Greifelemente pro Greifsystem vorgesehen sein. Der erfindungsgemäßen Vorrichtung ist ein in den Figuren nicht dargestelltes Steuerwerk, insbesondere ein Mikroprozessor oder ein Personal Computer mit einem Steuerungsprogramm zugeordnet, das in der Weise ausgestaltet ist, daß die führungswagenindividuellen Hubeinrichtungen, die Führungswagen, Greifsysteme und Greifelemente individuell ansteuerbar sind.

Der Vorrichtung ist ein Sensor zum Erfassen mindestens einer Kodierung zugeordnet. Der Sensor kann an einem Greifsystem, insbesondere an einem Greifelement angeordnet sein. Hierauf ist die Erfindung jedoch nicht eingeschränkt. Es können auch mehrere Sensoren vorgesehen sein, die an der Vorrichtung und/oder an dem Regalsystem angeordnet sind. Die Kodierung, beispielsweise in Form eines Barcodes, ist insbesondere an dem Stückgut angeordnet. Ebenso können andere Kodierungen sowie Transponder vorgesehen werden.

Als Sensor kann beispielsweise ein Barcodeleser vorgesehen sein.

Die Kodierung kann das Stückgut beispielsweise hinsichtlich geometrischer Form, Abmessungen, Soll-Lagerort im Regalsystem bezeichnen und stückgutidentifizierende Daten enthalten. In Abhängigkeit der von dem bzw. von den Sensoren erfaßten Kodierung(en) wird der Betrieb der Vorrichtung gesteuert.

Die Erfindung betrifft auch ein Regalsystem, ein Führungswagen, Greifsystem sowie ein Magazin (SM in Figur 4; Aufnahmevorrichtung AV in Figur 5) für die vorstehend beschriebenen Ausführungsformen der erfindungsgemäßen Vorrichtung.

### BEZUGSZEICHENLISTE

- V: Vorrichtung zum Be- und Entladen von Stückgut

- RS: Regalsystem
- RS1: erstes Regalsystem
- RS2: zweites Regalsystem
- RF: Regalfächer
- RST: Regalsystemträger (Figur 7)
- RSTB: Regalsystemträgerbreite (Figur 7)

- FW: Führungswagen (für RS1, RS2)

- RS3: weiteres Regalsystem (Figur 6)
- RS3K1, RS3K2, ...: Komponenten von RS3
- FW3: Führungswagen (für RS3)

- HE: Hubeinrichtung
- HE1, HE2: erstes und zweites Teil der Hubeinrichtung

- FV: vertikales Führungselement
- FV1: erstes vertikale Führungselement
- FV2: zweites vertikale Führungselement

- FH: horizontales Führungselement

- GS: Greifsystem
- GS1: erstes Greifsystem
- GSE11: erstes Greifelement des ersten Greifsystems
- GSE12: zweites Greifelement des ersten Greifsystems
- GSEB: Breite eines Greifelements

- GSL1: erstes Linearführungsteil (GSE11)
- GSL2: zweites Linearführungsteil (GSE12)

- GSF1: erstes Trägerelement (GSE11)
- GSF2: zweites Trägerelement (GSE12)

- GSR11, GSR12: Rollen (GSE11)
- GSR21, GSR22: Rollen (GSE12)

- TR11: Transportriemen (GSE11)
- TR12: Transportriemen (GSE12)

- ZA1: erste zentrale Antriebseinheit (für TR11 und TR12)

- AR: Antriebsriemen

- TR: Transportriemen

- MS1: Schwenkmechanismus (GS1)
- EX: Exzenter
- ATR: Antriebsrolle
- LS: Lagerstelle

- GS2: zweites Greifsystem
- GSE21: erstes Greifelement des zweiten Greifsystems
- GSE22: zweites Greifelement des zweiten Greifsystems

- SM: Stapel- und Entstapelmagazin (Figur 4)
- SMFW1, SMFW2: vertikale Führungswinkel

- SMTR1, SMTR2: Mitnehmer
- SMUR1, SMUR2: Umlenkrollen
- SMK1, SMK2: Mitnehmerketten
- ZA2: zweite zentrale Antriebseinheiten (für SMK1 und SMK2)

- AV: Aufnahmevorrichtung (Figur 5)
- AV1: Aufnehmer

- LG: Stückgut, Stückguteinheit
- LGB: Stückgutbreite (Figur 7)

- ÜP1, ÜP2: erster und zweiter Übergabeplatz
- WT: Werkstückträger

- ÜP3: Übergabeplatz (für FW3, Figur 6)

## Patentansprüche

1. Vorrichtung (V) zum Beladen von Stückgut (LG) in mindestens ein Regalsystem (RS), wobei-die Vorrichtung mindestens einen Führungswagen (FW) und mindestens ein Greifsystem (GS1) zum Greifen des Stückguts (LG) aufweist, wobei das Greifsystem (GS1) ein erstes und ein zweites Greifelement (GSE11, GSE12) aufweist und in der Weise ausgestaltet ist, daß das Stückgut (LG) seitlich umfaßt wird, und jedes Greifelement (GSE11, GSE12) an seiner dem Regalsystem (RS) zugewandten Seite eine Breite (GSEB) aufweist, die maximal der Breite (RSTB) eines vertikalen Regalsystemträgers (RST) entspricht,
**dadurch gekennzeichnet,**
daß der Abstand zwischen erstem und zweitem Greifelement (GSE11, GSE12) veränderbar ist.

2. Vorrichtung nach Anspruch 1, dadurch gekennzeichnet, daß der Vorrichtung (V) ein Steuerwerk mit einem Steuerungsprogramm zugeordnet ist, das in der Weise ausgestaltet ist, daß das erste Greifelement (GS11) und das zweite Greifelement (GS12) individuell ansteuerbar sind.

3. Vorrichtung nach einem der vorstehenden Ansprüche, dadurch gekennzeichnet, daß die Vorrichtung (V) ein erstes und ein zweites Greifsystem (GS1, GS2) aufweist, und daß der Vorrichtung (V) ein Steuerwerk mit einem Steuerungsprogramm zugeordnet ist, das in der Weise ausgestaltet ist, daß das erste Greifsystem (GS1) und das zweite Greifsystem (GS2) individuell ansteuerbar sind.

4. Vorrichtung (V) nach einem der vorstehenden Ansprüche, dadurch gekennzeichnet, daß der Vorrichtung ein Sensor zum Erfassen mindestens einer Kodierung zugeordnet ist.

5. Vorrichtung (V) nach einem der vorstehenden Ansprüche, dadurch gekennzeichnet, daß der Sensor ein Barcodeleser ist.

6. Vorrichtung (V) nach einem der vorstehenden Ansprüche, dadurch gekennzeichnet, daß die Vorrichtung ein horizontales Führungselement (FH) zur horizontalen Positionierung des Führungswagens (FW) und/oder ein vertikales Führungselement (FV) zur vertikalen Positionierung des Führungswagens (FW) aufweist, und daß das horizontale Führungselement (FH) und/oder das vertikale Führungselement (FV) mit dem Regalsystem (RS) verbindbar ist.

7. Vorrichtung nach Anspruch 6, dadurch gekennzeichnet, daß das Regalsystem (RS) einerseits und das horizontale Führungselement (FH) und/oder das vertikale Führungselement (FV) andererseits auf einem gemeinsamen Grundrahmen angeordnet sind.

8. Vorrichtung nach einem der vorstehenden Ansprüche, dadurch gekennzeichnet, daß die Vorrichtung (V) mehr als einen Führungswagen (FW) aufweist, und daß der Vorrichtung (V) ein Steuerwerk mit einem Steuerungsprogramm zugeordnet ist, das in der Weise ausgestaltet ist, daß die Führungswagen individuell ansteuerbar sind.

9. Vorrichtung nach einem der vorstehenden Ansprüche, dadurch gekennzeichnet, daß die Vorrichtung (V) mindestens ein Magazin (SM, AV) zur Aufnahme von mehr als einer Stückguteinheit (LG) aufweist.

10. Vorrichtung nach einem der vorstehenden Ansprüche, dadurch gekennzeichnet, daß das Regalsystem (RS) eine kreisring- oder kreisringsegmentförmige Grundfläche aufweist und daß der mindestens eine Führungswagen (FW3) drehbar bezüglich des Regalsystems (RS) gelagert ist.

11. Regalsystem (RS) für eine Vorrichtung nach einem der vorstehenden Ansprüche.

12. Führungswagen (FW) für eine Vorrichtung nach einem der Ansprüche 1 bis 10.

13. Greifsystem (GS) für eine Vorrichtung nach einem der Ansprüche 1 bis 10.

14. Magazin (SM, AV) für eine Vorrichtung nach Anspruch 9 oder 10.
